(19) **Europäisches Patentamt / European Patent Office / Office européen des brevets**

(11) **EP 3 244 094 B1**

(12) **FASCICULE DE BREVET EUROPEEN**

(45) Date de publication et mention
de la délivrance du brevet:
**16.08.2023 Bulletin 2023/33**

(21) Numéro de dépôt: **16169451.8**

(22) Date de dépôt: **12.05.2016**

(51) Classification Internationale des Brevets (IPC):
***G04B 13/02*** *(2006.01)*

(52) Classification Coopérative des Brevets (CPC):
**G04B 13/027;** F16H 1/06; F16H 55/08

(54) **ROUE D'ENGRENAGE POUR MOUVEMENT HORLOGER**

ZAHNRAD FÜR UHRWERK

GEAR WHEEL FOR A CLOCK MOVEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**15.11.2017 Bulletin 2017/46**

(73) Titulaire: **ROLEX SA**
**1211 Genève 26 (CH)**

(72) Inventeur: **THEURILLAT-BONJOUR, Quentin**
**1148 Cuarnens (CH)**

(74) Mandataire: **Moinas & Savoye SARL**
**27, rue de la Croix-d'Or**
**1204 Genève (CH)**

(56) Documents cités:
**EP-A1- 2 453 321    CH-A2- 699 679**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

Processed by Luminess, 75001 PARIS (FR)

## Description

### Introduction

La présente invention concerne un procédé de fabrication d'une roue d'engrenage pour mouvement horloger, adaptée pour coopérer avec une première roue d'engrenage donnée. Elle porte aussi sur une roue d'engrenage pour mouvement horloger en tant que telle, obtenue par un tel procédé, ainsi sur un engrenage en tant que tel comprenant une telle roue. Elle porte sur un mouvement horloger et sur une montre-bracelet en tant que tels comprenant un tel engrenage. Enfin, elle porte sur un système de fabrication d'une roue d'engrenage.

### Etat de l'Art

Dans le domaine de l'horlogerie, il est connu de déterminer le profil des dents des roues et des pignons d'engrenages sur la base de courbes géométriques telles que la cycloïde, l'épicycloïde, l'hypocycloïde ou la développante de cercle. Les roues et les pignons ainsi obtenus sont définis de façon à transmettre une vitesse de rotation qui demeure sensiblement constante au cours d'une menée de dent. Toutefois, du fait des forces de frottement qui sont inévitables dès que de tels engrenages ne sont plus à l'équilibre, le couple transmis au cours d'une menée de dent ne peut être constant.

Dans le cas par exemple d'une chaîne de rouage de finissage, de tels engrenages risquent ainsi de générer des variations dans la force transmise par l'échappement au balancier, ce qui peut se traduire par des variations d'amplitude des oscillations du balancier et donc une dégradation des performances chronométriques. Afin de palier à ce problème, et donc de permettre un couple de transmission constant, le document EP2453321A1 divulgue un engrenage entre une première et deuxième roue, dont les première et deuxième dentures sont calculées de manière à répondre à des équations paramétriques définies permettent d'obtenir la transmission d'un couple constant. Le profil des dents est alors obtenu de façon à prendre en compte les coefficients de frottements entre les flancs desdites première et deuxième denture.

Ainsi, le but général de la présente invention est de proposer une solution de roue ou pignon d'engrenage pour mouvement horloger qui ne comprend pas les inconvénients de l'état de la technique.

Plus précisément, un objet de la présente invention est de proposer une solution de définition de la géométrie d'une roue ou pignon d'engrenage pour mouvement horloger fiable, qui permet de garantir une précision améliorée des performances chronométriques du mouvement horloger.

### Brève description de l'invention

A cet effet, l'invention repose sur un procédé de fabrication d'une seconde roue d'engrenage pour mouvement horloger, adaptée pour coopérer avec une première roue d'engrenage donnée, caractérisé en ce qu'il comprend les étapes suivantes:

- saisir par l'intermédiaire d'une interface homme machine associée à un calculateur le flanc de tout ou partie des dents et le nombre de dents de la première roue d'engrenage,
- saisir le nombre de dents de la seconde roue d'engrenage à fabriquer, et
- saisir un coefficient de frottement d'une paire de dents en contact des deux roues d'engrenage,
- considérer une première équation définissant le bilan de puissance ou de couple d'au moins une paire de dents en contact des deux roues d'engrenage, et
- considérer une seconde équation cinématique définissant la relation cinématique de la au moins une paire de dents en contact des deux roues d'engrenage, et
- résoudre les deux équations par le calculateur, permettant d'obtenir au moins une valeur du rapport de couple considéré constant de la au moins une paire de dents en contact des deux roues d'engrenage, et
- déterminer au moins deux points du flanc d'au moins une portion de la dent de la seconde roue d'engrenage de ladite au moins une paire de dents et construire le flanc de ladite dent de la seconde roue d'engrenage, par exemple par interpolation, notamment par interpolation par une succession de droites et/ou de courbes, notamment de splines, entre lesdits points, et
- fabriquer la seconde roue d'engrenage par un dispositif de fabrication, cette seconde roue d'engrenage comprenant des dents dont le flanc correspond au résultat de l'étape précédente.

L'invention porte aussi sur un système de fabrication d'une roue d'engrenage qui met en oeuvre le procédé ci-dessus.

L'invention porte aussi sur une roue d'engrenage pour mouvement horloger, adaptée pour coopérer avec une première roue d'engrenage donnée, caractérisée en ce qu'elle comprend des dents dont le flanc est défini de sorte que le rapport de couple entre les deux roues d'engrenage engrenées est constant au moins sur un pas angulaire donné.

L'invention porte aussi sur un engrenage pour mouvement horloger, un mouvement horloger ou une montre-bracelet en tant que tels, comprenant une telle roue d'engrenage.

L'invention est plus précisément définie par les revendications.

**Brève description des figures**

Ces objets, caractéristiques et avantages de la présente invention seront exposés en détail dans la description suivante d'un mode de réalisation particulier fait à titre non-limitatif en relation avec les figures jointes parmi lesquelles :

La figure 1 représente schématiquement un logigramme des étapes du procédé de fabrication d'une roue d'engrenage pour mouvement horloger selon un mode de réalisation de la présente invention.

Les figures 2 et 3 représentent schématiquement une vue en coupe par un plan horizontal d'un exemple d'engrenage obtenu par le procédé de fabrication selon le mode de réalisation de la présente invention.

La figure 4 représente une vue agrandie de la figure 3 au niveau des dents en contact des deux roues d'engrenage.

Pour simplifier la description, nous utiliserons par convention les termes de « direction verticale » pour la direction parallèle à un axe de rotation d'une roue d'engrenage étudiée, et la direction horizontale pour une direction perpendiculaire à la direction verticale.

L'invention permet de définir, pour une première roue d'engrenage donnée quelconque, notamment une première roue d'engrenage conventionnelle pour mouvement horloger, une seconde roue conjuguée dont la denture présente une géométrie qui permet la transmission d'un couple de manière à ce que le rapport des couples des deux roues d'engrenage soit quasi-constant ou constant au cours d'une menée de dent, lorsque les deux roues sont engrenées.

De préférence, la géométrie de la denture d'une roue se définit par les extrémités périphériques de la roue, c'est-à-dire le flanc de la roue. De préférence, ce flanc s'étend dans une direction verticale. Cette géométrie présente avantageusement une section par un plan horizontal constante, dans laquelle chaque dent présente un certain profil, le profil correspondant ainsi à la géométrie obtenue par la projection du flanc sur ce plan horizontal. Nous utiliserons ainsi le terme de flanc ou abusivement de profil pour mentionner le contour de tout ou partie d'une dent d'une roue d'engrenage dans la description qui va suivre.

Le mode de réalisation décrit un procédé permettant de définir un profil de denture pour une roue menante ou menée, à partir d'une première roue conjuguée donnée, connue.

Plus précisément, l'invention permet de définir tout engrenage constitué d'une première roue R1 donnée, pivotée selon un premier axe A1, dotée d'un premier flanc (ou profil) de denture $r_1$ donné et d'une deuxième roue R2, pivotée selon un deuxième axe A2, engrenée avec la première roue R1, et dotée d'un deuxième flanc (ou profil) de

$$j = \frac{C_2}{C_1}$$

denture $r_2$ qui est défini de telle façon que le rapport de couple $j = \frac{C_2}{C_1}$ est constant sur un pas angulaire $p_1$ de la roue R1, où $C_1$ et $C_2$ représentent les couples respectifs exercés par les roues R1 et R2 mesurés à un point de contact de la ligne d'engrènement des roues R1 et R2, relativement aux axes A1 et A2, pour une position angulaire donnée de la première roue R1.

Le procédé va être décrit pour définir la géométrie d'au moins une portion de dent, par exemple au moins une portion du flanc d'au moins une dent de la seconde roue R2. Il peut naturellement être avantageusement utilisé pour définir la géométrie totale d'au moins une dent, et de préférence de toutes les dents de la seconde roue.

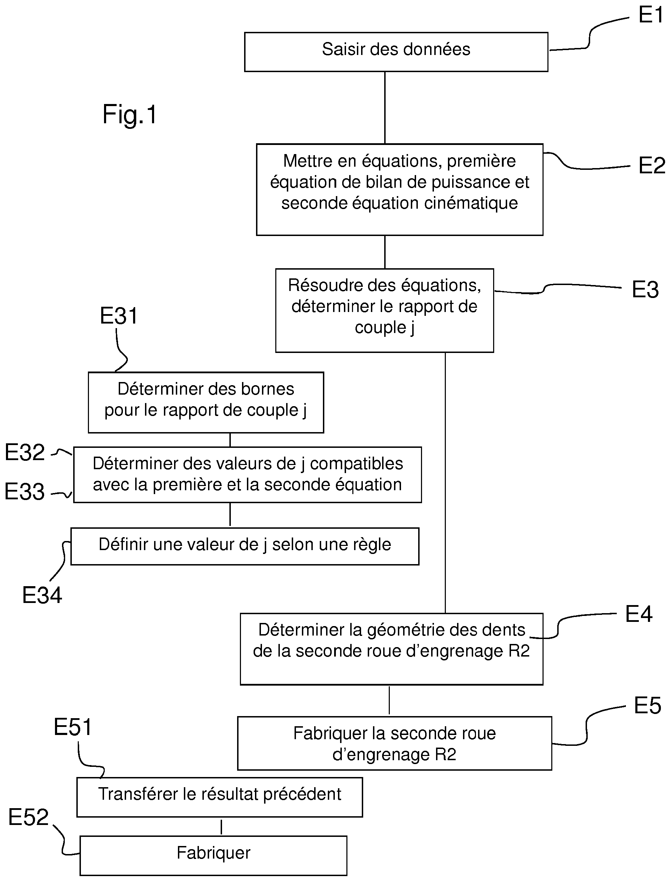

Selon le mode de réalisation général de l'invention, le procédé de fabrication d'une seconde roue d'engrenage R2 pour mouvement horloger, adaptée pour coopérer avec une première roue d'engrenage R1 donnée, comprend les étapes suivantes, tel que représenté schématiquement par la figure 1 :

E1 - saisir par l'intermédiaire d'une interface homme machine associée à un calculateur le flanc $r_1$ de tout ou partie des dents et le nombre de dents $z_1$ de la première roue d'engrenage R1,

- saisir le nombre de dents $z_2$ de la seconde roue d'engrenage R2 à fabriquer, et
- saisir un coefficient de frottement $\mu$ d'une paire de dents en contact des deux roues d'engrenage R1, R2, et

E2 - considérer une première équation définissant le bilan de puissance ou de couple d'au moins une paire de dents en contact des deux roues d'engrenage R1, R2, et

- considérer une seconde équation cinématique définissant la relation cinématique de la au moins une paire de dents en contact des deux roues d'engrenage R1, R2, et

E3 - résoudre les deux équations par le calculateur, permettant d'obtenir au moins une valeur du rapport de couple $j$ considéré constant de la au moins une paire de dents en contact des deux roues d'engrenage R1, R2, et

E4 - déterminer au moins deux points du flanc d'au moins une portion de la dent de la seconde roue d'engrenage R2 de ladite au moins une paire de dents et construire le flanc $r_2$ de ladite dent de la seconde roue d'engrenage R2, par exemple par interpolation, notamment par interpolation par une succession de droites et/ou de courbes, notamment de splines, entre lesdits points, et

E5 - fabriquer la seconde roue d'engrenage R2 par un dispositif de fabrication, cette seconde roue d'engrenage R2 comprenant tout ou partie des dents dont le flanc $r_2$ correspond au résultat de l'étape précédente.

Selon ce mode de réalisation, la seconde étape E2 consiste à considérer la première équation de bilan de puissance suivante :

$$C_1 \cdot \omega_1 - C_2 \cdot \omega_2 + F_{\text{frot}} \cdot v_{12} = 0 \quad (1)$$

où $C_1$ et $C_2$ représentent les couples respectifs d'une paire de dents en contact des deux roues d'engrenage R1, R2, mesurés à un point de contact de la ligne d'engrènement des deux roues d'engrenage R1, R2, relativement aux axes de rotation A1, A2 respectifs des deux roues d'engrenage R1, R2, pour une position angulaire donnée de la première roue d'engrenage R1,
$\omega_1$ et $\omega_2$ représentent les vitesses angulaires respectives des deux roues d'engrenage R1, R2, et
$F_{\text{frot}}$ représente la force de frottement au point de contact des deux roues d'engrenage R1, R2.

De plus, la seconde étape E2 consiste à considérer la seconde équation cinématique suivante :

$$\frac{\partial r_2}{\partial u} \times \frac{\partial r_2}{\partial \theta} \cdot v_{12} = 0 \quad (2)$$

où $r_2$ représente au moins une portion du flanc d'une dent de la seconde roue d'engrenage R2 en contact avec une dent de la première roue d'engrenage R1, exprimé dans un repère considérant une abscisse curviligne $u$ et une grandeur angulaire $\theta$ et
$v_{12}$ représente la vitesse de glissement entre les deux roues d'engrenage R1, R2 à leur point de contact.

Une telle équation cinématique (2) permet notamment de caractériser le flanc $r_2$ d'une dent de la seconde roue d'engrenage R2 dont la normale sera constamment perpendiculaire à la vitesse de glissement.

Selon un mode de réalisation particulier, la première roue d'engrenage R1 constitue une roue droite, c'est-à-dire dont le profil est identique sur l'ensemble des plans perpendiculaires à l'axe de rotation de la roue. La droite génératrice de ce flanc est parallèle à l'axe de rotation de la roue. Par convention, nous considérons de manière simplifiée que le flanc est alors vertical. De même, la seconde roue d'engrenage R2 se présente comme une roue droite. Elle est apte à s'engrener par rotation autour d'un second axe de rotation A2 parallèle au premier axe de rotation A1 de la première roue d'engrenage R1.

Dans ce mode de réalisation particulier, la seconde étape E2 considère la première équation de bilan de puissance suivante, dérivée de l'équation (1) ci-dessus en faisant intervenir un modèle de frottement de Coulomb avec un coefficient de frottement $\mu$ constant au point de contact :

$$\frac{1+j}{1+\bar{\imath}} = \frac{n_x z_1}{2(r_{ny} n_x - r_{nx} n_y)} - \frac{\mu z_1}{2 r_{1n}(\sin \widehat{r_1 n} \pm \mu \cos \widehat{r_1 n})} \frac{|r_{nx}|}{|r_{ny} n_x - r_{nx} n_y|} \quad (3)$$

où

$$j = \frac{C_2}{C_1} = \text{constante}$$

- $\bar{\imath}$ représente la valeur moyenne du rapport de transmission entre les deux roues d'engrenage R1, R2,
- $n_x$, $n_y$ représentent les composantes $x$ et $y$ de la normale au profil de la première roue d'engrenage R1 au point de contact entre les deux roues d'engrenage R1, R2,

- le profil $r_{1n}$ des dents de la première roue d'engrenage R1 s'exprime par $r_{1n} = (r_{nx}, r_{ny})$, $r_{nx}$ et $r_{ny}$ étant les composantes $x$ et $y$ du profil normalisé de $r_1$ au point de contact entre les deux roues d'engrenage R1, R2 ;

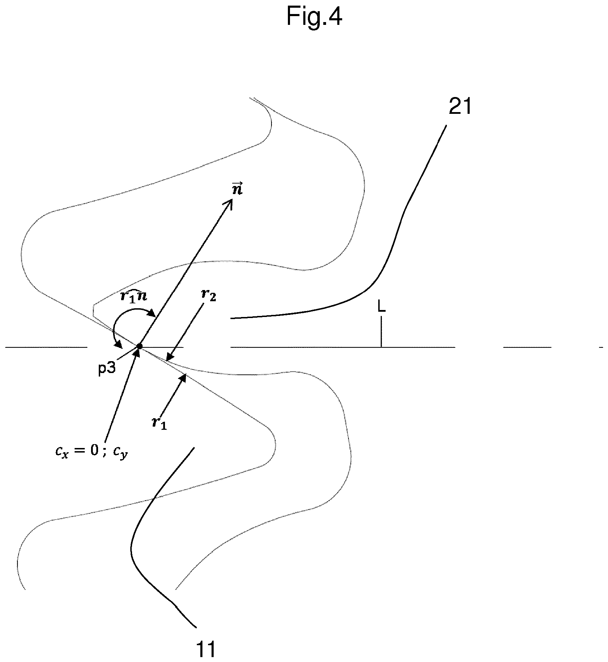

- $\widehat{r_1 n}$ représente l'angle formé par le vecteur position du point du profil concerné et la normale n au profil $r_1$ de la première roue d'engrenage R1, comme représenté sur l'exemple de la figure 4.

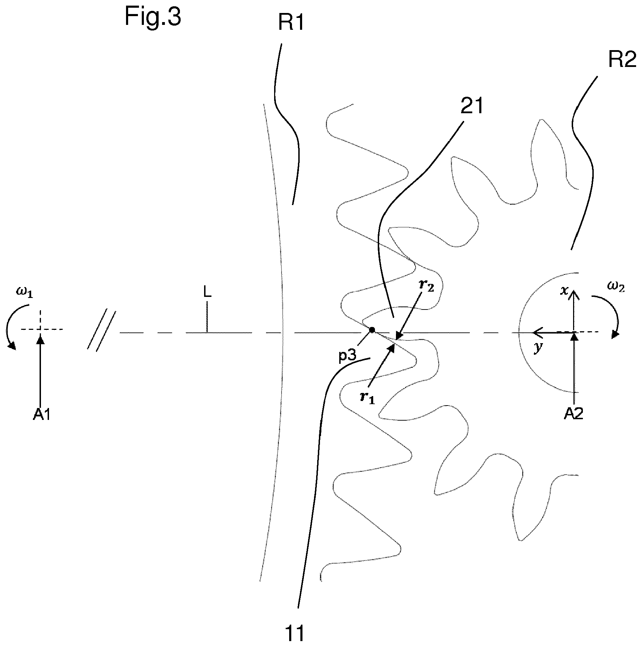

En remarque, dans ce mode de réalisation, chaque roue présente une section horizontale constante, qui définit un profil de dents. Il suffit donc de définir ce profil pour déterminer la géométrie tridimensionnelle des roues. Pour cela, les équations s'intéressent au profil, et considèrent un repère cartésien orthonormé, dans lequel l'axe y des ordonnées est choisi sur la ligne des centres, reliant les centres de rotation des deux roues, comme représenté sur l'exemple de la figure 3. Naturellement, il serait en variante possible de considérer un autre repère.

De plus, dans ce mode de réalisation particulier, la seconde étape E2 considère l'équation cinématique suivante, qui dérive de l'équation (2) ci-dessus par une simplification sur la base du théorème de Lewis :

$$\frac{c_x - r_x}{n_x} = \frac{c_y - r_y}{n_y} \qquad (4)$$

où

le profil $r_1$ des dents de la première roue d'engrenage R1 s'exprime par $r_1 = (r_x, r_y)$, $r_x$ et $r_y$ étant les composantes $x$ et $y$ du profil $r_1$ au point de contact entre les deux roues d'engrenage R1, R2 ;

- $c_x$, $c_y$ représentent les composantes $x$ et $y$ du centre instantané de rotation;
- $n_x$, $n_y$ représentent les composantes $x$ et $y$ de la normale au profil de la première roue d'engrenage R1 au point de contact entre les deux roues d'engrenage R1, R2,

Dans le cas particulier, comme représenté sur la figure 4, nous avons :

$$c_x = 0$$

$$c_y = \frac{E}{1 + i}$$

où

- $i = \dfrac{\omega_{1(\phi_1)}}{\omega_{2(\phi_2)}}$, représente le rapport de transmission instantané pour chaque position $\phi_i$ de la roue Ri,

- E représente l'entraxe des roues R1, R2, qui peut également s'écrire : $E = \dfrac{m z_1 (1 + \bar{\imath})}{2}$, où $\bar{\imath} = \dfrac{z_2}{z_1}$ avec $z_i$ le nombre de dents de la roue Ri et $m$ le module des dents, et $\bar{\imath}$ représente la valeur moyenne du rapport de transmission entre les deux roues d'engrenage R1, R2.

Sur cette base, l'équation (4) ci-dessus peut aussi en variante s'écrire de la manière suivante :

$$\frac{1 + i}{1 + \bar{\imath}} = \frac{n_x z_1}{2(r_{ny} n_x - r_{nx} n_y)} \qquad (5)$$

où

- $i$ représente le rapport de transmission instantané à un point de contact entre les deux roues d'engrenage R1, R2,
- $\bar{\imath}$ représente la valeur moyenne du rapport de transmission entre les deux roues d'engrenage R1, R2,
- $n_x$, $n_y$ représentent les composantes $x$ et $y$ de la normale au profil de la première roue d'engrenage au point de contact entre les deux roues d'engrenage R1, R2,

- E représente l'entraxe des deux roues d'engrenage R1, R2,
- le profil $r_{1n}$ des dents de la première roue d'engrenage R1 s'exprime par $r_{1n} = (r_{nx}, r_{ny})$, $r_{nx}$ et $r_{ny}$ étant les composantes $x$ et $y$ du profil normalisé de $r_1$ au point de contact entre les deux roues d'engrenage R1, R2 ;

$$r_{1n} = \left( r_{nx}, r_{ny} \right) = \frac{r_1}{m}$$

Pour faciliter la résolution des équations précédentes à l'étape E3, notamment la recherche de la valeur du rapport de couple j, le procédé de fabrication d'une seconde roue d'engrenage R2 pour mouvement horloger comprend les sous-étapes suivantes :

E31 : définir une valeur minimale $j_{min}$ et une valeur maximale $j_{max}$ possibles du rapport de couple $j$ , en mettant en oeuvre les calculs suivants :

$$j_{max} = \overline{\iota} = \frac{z_2}{z_1}$$

et

$$j_{min} = i_{min} = \frac{\omega_{1(\phi)}}{\omega_{2(\phi)}} r_1$$

où

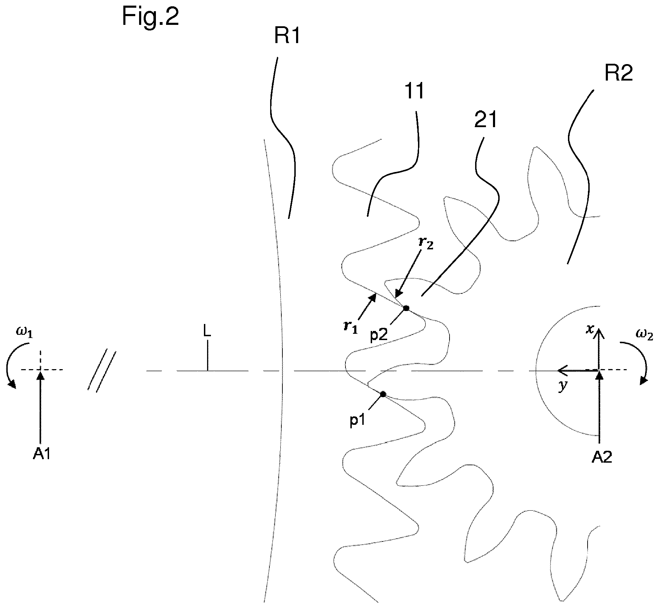

$\phi$ représente l'angle définissant le point de contact des profils $r_1$ et $r_2$ sur la ligne L des centres des deux roues d'engrenage R1, R2, et
$\omega_1$ et $\omega_2$ représentent les vitesses angulaires de respectivement les deux roues d'engrenage R1, R2, comme représenté sur la figure 2.
Cette sous-étape permet de définir un intervalle de valeurs possibles pour j, qui borne la résolution suivante ;

E32 - résoudre la première équation (3) pour plusieurs points du profil $r_1$ de la première roue d'engrenage R1 pour déterminer plusieurs valeurs du rapport de couple $j$ :

$$\frac{1+j}{1+\overline{\iota}} = \frac{n_x z_1}{2(r_{ny}\, n_x - r_{nx}\, n_y)} - \frac{\mu\, z_1}{2 r_{1n}(\sin\widehat{r_1 n} \pm \mu\, \cos\widehat{r_1 n})} \frac{|r_{nx}|}{|r_{ny}\, n_x - r_{nx}\, n_y|} \quad (3)$$

E33 - identifier les valeurs de rapport de couple $j$ compatibles avec la deuxième équation cinématique ;
E34 - sélectionner une valeur de rapport de couple j parmi les valeurs de rapport de couple compatibles identifiées à l'étape précédente selon une règle prédéfinie, comme par exemple la maximisation du rendement moyen, permettant de maximiser le rendement moyen $\overline{\eta} = \frac{j}{\overline{\iota}}$.

Selon ce mode de réalisation, la quatrième étape E4 comprend la résolution de la deuxième équation cinématique en considérant la valeur de rapport de couple $j$ sélectionnée constante pour obtenir au moins des points du profil $r_2$ d'au moins une portion de dent de la seconde roue d'engrenage R2.
D'autre part, selon le mode de réalisation, la première étape E1 comprend une sous-étape supplémentaire consistant à saisir la résolution souhaitée pour le calcul du flanc $r_2$ de la seconde roue d'engrenage R2 et l'étape E4 permet une résolution discrète, définissant des points du flanc $r_2$ de la seconde roue d'engrenage R2 selon cette résolution saisie lors de la première étape E1.
Pour faciliter la fabrication ultérieure, la quatrième étape E4 selon le mode de réalisation comprend une sous-étape consistant à élaborer un fichier de données numériques représentant numériquement le flanc $r_2$ de la seconde roue d'engrenage R2.
En pratique, la résolution des équations se fait par une méthode numérique de résolution, mise en oeuvre par un calculateur.

Ensuite, la cinquième étape E5 de fabrication de la seconde roue d'engrenage R2 par un dispositif de fabrication comprend une sous-étape de transfert E51 du résultat de la quatrième étape à un dispositif de fabrication, notamment sous forme d'un transfert de données numériques par un dispositif de communication du calculateur mettant en oeuvre les troisième et quatrième étapes E3, E4. Elle comprend ensuite une sous-étape E52 de fabrication de la seconde roue d'engrenage R2 par un dispositif de fabrication, par enlèvement de matière, notamment par usinage, ou par addition de matière, notamment par électroformage.

Optionnellement, le procédé peut comprendre une sous-étape supplémentaire consistant à reconstruire le profil $r_2$ de la seconde roue d'engrenage R2 pour un module m non unitaire prédéfini ou saisi par une interface homme machine. De préférence, le module m respecte les conditions suivantes : 0,03<m<0,8.

Les figures 2 à 4 illustrent la mise en oeuvre du procédé décrit précédemment pour un engrenage comprenant deux roues R1, R2 droites, dont les vues en coupe horizontale sont reproduites. Cet engrenage est élaboré à partir d'une première roue d'engrenage R1 menante connue, centrée en A1, et dont le profil de denture $r_1$ est un profil traditionnel, en développante de cercle avec un angle de pression de 30°. Un tel profil est avantageusement choisi dans le but de minimiser la sensibilité de l'engrenage aux variations d'entraxe.

Les paramètres d'entrée associés à la première roue d'engrenage R1, saisis à l'étape E1, sont les suivants :

- le profil $r_1$ des dents 11, qui sont toutes identiques, de la première roue d'engrenage R1 :

$$r_1(u) = r_{b1}\begin{pmatrix}\cos(u) + u\sin(u)\\ \sin(u) - u\cos(u)\end{pmatrix},$$

où $r_{b1}$ est le rayon de base de la développante,
- le nombre de dents : $z_1$ = 98.

De plus, le coefficient de frottement constant est saisi : $\mu$ = 0,2.

La seconde roue d'engrenage R2 menée, à fabriquer, est centrée en A2. Son profil de denture $r_2$ est le profil à déterminer selon le procédé exposé ci-dessus. Plus précisément, ce procédé est mis en oeuvre pour déterminer la portion antérieure du profil d'une dent 21 de cette seconde roue d'engrenage R2, portion qui reste en contact avec une dent 11 de la première roue d'engrenage R1 entre le point p1, correspondant sensiblement au début d'engrènement de la paire de dents 11, 21 des roues d'engrenage R1 et R2, jusqu'au point p2, correspondant sensiblement à la fin d'engrènement de la paire de dents 11, 21 des roues d'engrenage R1 et R2, sur un pas angulaire de la roue menante R1 tournant en sens anti-trigonométrique, comme représenté sur la figure 2.

Les figures 3 et 4 illustrent une position intermédiaire de la paire de dents 11, 21 en contact, au niveau d'un point p3 positionné sur la ligne L des centres.

La résolution des équations et la mise en oeuvre du procédé décrit précédemment permet d'obtenir les résultats suivants :

- $j$ = 6,811
- Des points définissant le profil conjugué $r_2$ de la portion de dent 21 considérée. Cette portion est complétée par interpolation entre ces points, puis la dent complète est dessinée, notamment en considérant une symétrie autour de son axe central. Enfin, toutes les dents de la seconde roue d'engrenage R2 sont choisies identiques à cette dent 21 déterminée. Ainsi, le résultat obtenu est tel que représenté par les figures 2 à 4. En remarque, le nombre de points déterminés (étape E4) est supérieur ou égal à deux, est choisi selon un compromis entre la précision souhaitée, qui augmente avec l'augmentation du nombre de points, et la rapidité souhaitée du calcul, qui diminue avec l'augmentation du nombre de points.

Naturellement, le procédé décrit ci-dessus présente une résolution mathématique complexe qui peut nécessiter des simplifications, et permet de définir une seconde roue d'engrenage R2 de sorte que la transmission d'un rapport de couple, en théorie constant, soit en pratique sensiblement constant au cours d'une menée de dent, c'est-à-dire que la variation du rapport de couple j soit inférieure ou égale à une variation de 2%, voire 1,5%, au cours d'une menée de dent. De plus, on note que dans le cas particulier représenté par les figures 2 à 4, la variation $\Delta j$ du rapport de couple est inférieure à 1,5% pour une variation $\Delta E$ d'entraxe de l'ordre de 1,5% par rapport l'entraxe E nominal.

En comparaison, dans le cas d'un engrenage conventionnel de l'état de la technique comportant deux roues dotées d'un profil en développante de cercle, la variation du rapport de couple est de l'ordre de 8% à entraxe nominal, et de l'ordre de 9% pour une variation $\Delta E$ d'entraxe de l'ordre de 1,5% par rapport à l'entraxe E nominal.

Avantageusement, le profil de denture $r_2$ de la seconde roue d'engrenage R2 peut être prévu pour être engrené par un profil de denture $r_1$ standardisé de la première roue d'engrenage R1, en particulier un profil $r_1$ en développante

de cercle ou dérivé de la développante de cercle, par exemple avec un angle de pression compris entre 5° et 50°. Un tel profil est peu sensible aux variations d'entraxe, comme représenté par l'exemple des figures 2 à 4. En variante, une première roue R1 basée sur une courbe géométrique comme une cycloïde, une épicycloïde, ou une hypoclycloïde, peut être utilisée. En variante, le premier profil $r_1$ est défini par une norme NIHS ou dérivé d'une telle norme, notamment un profil selon l'une des normes NIHS 20-02 ou NIHS 20-25. En variante, le profil $r_1$ est issu d'une succession d'arcs de cercle et de droites. En remarque, dans ces exemples, le profil des dents de la seconde roue d'engrenage conjuguée, déterminée par le procédé selon l'invention, sera différent du profil des dents de la première dent d'engrenage.

Le procédé décrit précédemment sera avantageusement utilisé pour définir une roue d'engrenage pour laquelle toutes les dents sont identiques. De plus, chaque dent possède avantageusement un profil avec un axe de symétrie horizontal et/ou un flanc avec un plan de symétrie vertical. En variante toutefois, l'invention n'exclut pas la fabrication de roues comprenant des dents de géométries différentes, et/ou des dents asymétriques. La roue elle-même peut être asymétrique, ne présentant par exemple des dents que sur une partie de son pourtour.

D'autre part, le procédé peut être mis en oeuvre pour atteindre l'effet technique de rapport de couple constant sur toute l'amplitude angulaire d'engrènement de deux dents, c'est-à-dire du début à la fin d'engrènement (du point p1 au point p2 pour reprendre l'exemple de la figure 2) ou seulement sur une portion significative de cette amplitude angulaire, notamment au moins sur la moitié de cette course d'engrènement entre une paire de dents. Nous entendrons donc par rapport de couple constant entre deux roues d'engrenage un rapport de couple constant, ou sensiblement constant, entre deux dents particulières engrenées, sur une course non négligeable de l'ensemble de leur ligne d'engrènement.

L'invention porte aussi sur une roue ou pignon d'engrenage en tant que tel, fabriqué par un procédé tel que décrit précédemment. Une telle roue ou pignon fait partie d'un mouvement horloger, et peut plus précisément appartenir à une chaine de rouage de finissage.

L'invention porte aussi sur un engrenage comprenant une première roue d'engrenage R1 donnée quelconque, qui peut être l'une des roues conventionnelles parmi les exemples donnés précédemment ou toute autre roue, et une seconde roue R2 conjuguée définie par le procédé décrit précédemment, de sorte que le rapport de couple j entre les deux roues d'engrenage R1, R2 soit constant ou sensiblement constant, au moins sur un pas angulaire donné.

Les flancs (ou profils) $r_1$, $r_2$ des dents des deux roues d'engrenage R1, R2 satisfont à l'équation suivante :

$$\bar{\iota} = \frac{z_2}{z_1} = \frac{1}{p_1} \int_{\phi_1}^{\phi_1 + p_1} i(\phi, j) \mathrm{d}\phi \quad (6)$$

où

- $\phi$ représente une position quelconque de la première roue d'engrenage R1 sur un pas angulaire $p_1$ de ladite première roue d'engrenage R1 depuis une position de départ $\phi_1$, et
- $\bar{\iota}$ représente la valeur moyenne du rapport de transmission entre les deux roues d'engrenage R1, R2.

Selon un mode de réalisation particulier, dans cet engrenage pour mouvement horloger, les axes de rotation A1, A2 respectifs des deux roues d'engrenage R1, R2 sont sensiblement parallèles et les deux roues d'engrenage R1, R2 sont des roues droites.

Dans ce cas, les profils $r_1$, $r_2$ respectifs des deux roues d'engrenage R1, R2 satisfont avantageusement les équations suivantes, déjà décrites précédemment :

$$\frac{1+i}{1+\bar{\iota}} = \frac{n_x z_1}{2(r_{ny} n_x - r_{nx} n_y)} \quad (5)$$

et

$$\frac{1+j}{1+\bar{\iota}} = \frac{n_x z_1}{2(r_{ny} n_x - r_{nx} n_y)} - \frac{\mu z_1}{2 r_{1n}(\sin \widehat{r_1 n} \pm \mu \cos \widehat{r_1 n})} \frac{|r_{nx}|}{|r_{ny} n_x - r_{nx} n_y|} \quad (3)$$

où :

- $i$ représente le rapport de transmission instantané à un point de contact entre les deux roues d'engrenage R1, R2,

- $\bar{\imath}$ représente la valeur moyenne du rapport de transmission entre les deux roues d'engrenage R1, R2,
- $n_x$, $n_y$ représentent les composantes $x$ et $y$ de la normale au profil de la première roue d'engrenage au point de contact entre les deux roues d'engrenage R1, R2,

  le profil $r_{1n}$ des dents de la première roue d'engrenage R1 s'exprime par $r_{1n} = (r_{nx}, r_{ny})$, $r_{nx}$ et $r_{ny}$ étant les composantes $x$ et $y$ du profil normalisé de $r_1$ au point de contact entre les deux roues d'engrenage R1, R2 ;

- $\widehat{r_1 n}$ représente l'angle formé par le vecteur position du point du profil concerné et la normale n au profil $r_1$ de la première roue d'engrenage R1.

L'invention porte aussi sur un mouvement horloger et sur une montre bracelet, comprenant un engrenage tel que décrit ci-dessus.

L'invention porte aussi sur un système de fabrication, qui comprend des composants logiciel et matériel, notamment au moins un calculateur, doté d'une interface homme machine pour la saisie de données, par exemple lors de la première étape E1 du procédé, une mémoire électronique pour stocker des valeurs saisies, des paramètres de calcul, et des résultats du calcul, notamment des données numériques représentant la géométrie d'une roue d'engrenage à fabriquer, et un dispositif de communication pour la transmission desdits résultats. Ce système de fabrication comprend un dispositif de fabrication pour la fabrication d'une roue ou pignon d'engrenage en tant que telle, par exemple par usinage ou par addition de matière.

Le mode de réalisation de l'invention présente ainsi l'avantage de permettre la fabrication d'une roue d'engrenage optimale à partir d'une première roue d'engrenage quelconque, notamment comprenant un profil standardisé, la seconde roue, engrenée avec la première, étant dotée d'un profil conjugué en couple avec celui de la première.

## Revendications

1. Procédé de fabrication d'une seconde roue d'engrenage (R2) pour mouvement horloger, adaptée pour coopérer avec une première roue d'engrenage (R1) donnée, **caractérisé en ce qu'**il comprend les étapes suivantes:

   E1 - saisir par l'intermédiaire d'une interface homme machine associée à un calculateur le flanc $r_1$ de tout ou partie des dents et le nombre de dents $z_1$ de la première roue d'engrenage (R1),

   - saisir le nombre de dents $z_2$ de la seconde roue d'engrenage (R2) à fabriquer, et
   - saisir un coefficient de frottement $\mu$ d'une paire de dents en contact des deux roues d'engrenage (R1, R2),

   E2 - considérer une première équation définissant le bilan de puissance ou de couple d'au moins une paire de dents en contact des deux roues d'engrenage (R1, R2), et

   - considérer une seconde équation cinématique définissant la relation cinématique de la au moins une paire de dents en contact des deux roues d'engrenage (R1, R2), et

   E3 - résoudre les deux équations par le calculateur, permettant d'obtenir au moins une valeur du rapport de couple $j$ considéré constant de la au moins une paire de dents en contact des deux roues d'engrenage (R1, R2), et
   E4 - déterminer au moins deux points du flanc d'au moins une portion de la dent de la seconde roue d'engrenage (R2) de ladite au moins une paire de dents et construire le flanc $r_2$ de ladite dent de la seconde roue d'engrenage (R2), par exemple par interpolation, notamment par interpolation par une succession de droites et/ou de courbes, notamment de splines, entre lesdits points, et
   E5 - fabriquer la seconde roue d'engrenage (R2) par un dispositif de fabrication, cette seconde roue d'engrenage (R2) comprenant des dents dont le flanc $r_2$ correspond au résultat de l'étape précédente.

2. Procédé de fabrication d'une seconde roue d'engrenage (R2) pour mouvement horloger selon la revendication précédente, **caractérisé en ce que** la seconde étape (E2) consiste à considérer la première équation de bilan de puissance suivante :

$$C_1 \cdot \omega_1 - C_2 \cdot \omega_2 + F_{\mathrm{frot}} \cdot v_{12} = 0 \quad (1)$$

où $C_1$ et $C_2$ représentent les couples respectifs des deux roues d'engrenage (R1, R2), mesurés à un point de contact de la ligne d'engrènement des deux roues d'engrenage (R1, R2), relativement aux axes de rotation (A1, A2) respectifs des deux roues d'engrenage (R1, R2), pour une position angulaire donnée de la première roue d'engrenage (R1),

$\omega_1$ et $\omega_2$ représentent les vitesses angulaires respectives des deux roues d'engrenage (R1, R2), et

$F_{frot}$ représente la force de frottement au point de contact des deux roues d'engrenage (R1, R2),

et **en ce qu'**elle consiste à considérer la seconde équation cinématique suivante :

$$\frac{\partial r_2}{\partial u} \times \frac{\partial r_2}{\partial \theta} \cdot v_{12} = 0 \quad (2)$$

où $r_2$ représente au moins une portion du flanc d'une dent de la seconde roue d'engrenage (R2) en contact avec une dent de la première roue d'engrenage (R1), exprimé dans un repère considérant une abscisse curviligne $u$ et une grandeur angulaire $\theta$ et

$v_{12}$ représente la vitesse de glissement entre les deux roues d'engrenage (R1, R2) à leur point de contact.

3. Procédé de fabrication d'une seconde roue d'engrenage (R2) pour mouvement horloger selon la revendication 2, **caractérisé en ce que**, dans le cas où la première roue d'engrenage (R1) est une roue droite, la seconde roue d'engrenage (R2) est une roue droite apte à s'engrener par rotation autour d'un second axe de rotation (A2) parallèle au premier axe de rotation (A1) de la première roue d'engrenage (R1), et **en ce que** la seconde étape (E2) consiste à considérer la première équation suivante :

$$\frac{1+j}{1+\bar{\imath}} = \frac{n_x z_1}{2(r_{ny} n_x - r_{nx} n_y)} - \frac{\mu z_1}{2r_{1n}(\sin \widehat{r_1 n} \pm \mu \cos \widehat{r_1 n})} \frac{|r_{nx}|}{|r_{ny} n_x - r_{nx} n_y|} \quad (3)$$

où

$$j = \frac{c_2}{c_1} = \text{constante}$$

- $\bar{\imath}$ représente la valeur moyenne du rapport de transmission entre les deux roues d'engrenage (R1, R2),
- $n_x$, $n_y$ représentent les composantes $x$ et $y$ de la normale au profil de la première roue d'engrenage (R1) au point de contact entre les deux roues d'engrenage (R1, R2),
- le profil $r_{1n}$ des dents de la première roue d'engrenage (R1) s'exprime par $r_{1n} = (r_{nx}, r_{ny})$, $r_{nx}$ et $r_{ny}$ étant les composantes $x$ et $y$ du profil normalisé de $r_1$ au point de contact entre les deux roues d'engrenage (R1, R2),
- $\widehat{r_1 n}$ représente l'angle formé par le vecteur position du point du profil concerné et la normale n au flanc $r_1$ de la première roue d'engrenage (R1).

4. Procédé de fabrication d'une seconde roue d'engrenage (R2) pour mouvement horloger selon la revendication 1 ou 3, **caractérisé en ce que**, dans le cas où la première roue d'engrenage (R1) est une roue droite, la seconde roue d'engrenage (R2) est une roue droite apte à s'engrener par rotation autour d'un second axe de rotation (A2) parallèle au premier axe de rotation (A1) de la première roue d'engrenage (R1),

et **en ce que** la seconde étape (E2) consiste à considérer l'équation cinématique suivante :

$$\frac{c_x - r_x}{n_x} = \frac{c_y - r_y}{n_y} \quad (4)$$

où

le profil $r_1$ des dents de la première roue d'engrenage (R1) s'exprime par $r_1 = (r_x, r_y)$, $r_x$ et $r_y$ étant les composantes $x$ et $y$ du profil $r_1$ au point de contact entre les deux roues d'engrenage (R1, R2) ;

- $c_x$, $c_y$ représentent les composantes $x$ et $y$ du centre instantané de rotation;
- $n_x$, $n_y$ représentent les composantes $x$ et $y$ de la normale au profil de la première roue d'engrenage au point de contact entre les deux roues d'engrenage (R1, R2),

ou **en ce que** la seconde étape (E2) consiste à considérer l'équation cinématique suivante :

$$\frac{1+i}{1+\bar{\iota}} = \frac{n_x\,z_1}{2(r_{ny}\,n_x - r_{nx}\,n_y)} \quad (5)$$

où

    - $i$ représente le rapport de transmission instantané à un point de contact entre les deux roues d'engrenage (R1, R2),

    - $\bar{\iota}$ représente la valeur moyenne du rapport de transmission entre les deux roues d'engrenage (R1, R2),
    - $n_x$, $n_y$ représentent les composantes $x$ et $y$ de la normale au profil de la première roue d'engrenage au point de contact entre les deux roues d'engrenage (R1, R2),
    - E représente l'entraxe des deux roues d'engrenage (R1, R2),
    - le profil $r_{1n}$ des dents de la première roue d'engrenage (R1) s'exprime par $r_{1n} = (r_{nx}, r_{ny})$, $r_{nx}$ et $r_{ny}$ étant les composantes $x$ et $y$ du profil normalisé du flanc $r_1$ au point de contact entre les deux roues d'engrenage (R1, R2).

5.   Procédé de fabrication d'une seconde roue d'engrenage (R2) pour mouvement horloger selon la revendication 3, **caractérisé en ce que** la troisième étape (E3) qui consiste à résoudre les équations comprend les sous-étapes suivantes :

    E31 - définir une valeur minimale $j_{min}$ et une valeur maximale $j_{max}$ possible du rapport de couple $j$ entre les deux roues d'engrenage (R1, R2), en mettant en oeuvre les calculs suivants :

$$j_{max} = \bar{\iota} = \frac{z_2}{z_1}$$

et

$$j_{min} = i_{min} = \frac{\omega_1(\phi)}{\omega_2(\phi)}\,r_1$$

où

    $\phi$ représente l'angle définissant le point de contact des flancs $r_1$ et $r_2$ sur la ligne des centres des deux roues d'engrenage (R1, R2), et
    $\omega_1$ et $\omega_2$ représentent les vitesses angulaires de respectivement les deux roues d'engrenage (R1, R2) ;

    E32 - résoudre la première équation (3) pour plusieurs points du flanc $r_1$ de la première roue d'engrenage (R1) pour déterminer plusieurs valeurs du rapport de couple $j$ :

$$\frac{1+j}{1+\bar{\iota}} = \frac{n_x\,z_1}{2(r_{ny}\,n_x - r_{nx}\,n_y)} - \frac{\mu\,z_1}{2r_{1n}(\sin\widehat{r_1n} \pm \mu\,\cos\widehat{r_1n})}\frac{|r_{nx}|}{|r_{ny}\,n_x - r_{nx}\,n_y|}$$

    E33 - identifier les valeurs de rapport de couple $j$ compatibles avec la deuxième équation cinématique ;
    E34 - sélectionner une valeur de rapport de couple j parmi les valeurs de rapport de couple compatibles identifiées à l'étape précédente selon une règle prédéfinie, comme par exemple la maximisation du rendement moyen.

6.   Procédé de fabrication d'une seconde roue d'engrenage (R2) pour mouvement horloger selon l'une des revendications précédentes, **caractérisé en ce que** la première étape (E1) comprend une sous-étape supplémentaire consistant à saisir la résolution souhaitée pour le calcul du flanc $r_2$ de la seconde roue d'engrenage (R2) et **en ce que** la quatrième étape (E4) permet une résolution discrète, définissant des points du flanc $r_2$ de la seconde roue d'engrenage (R2) selon la résolution saisie lors de la première étape (E1).

7. Procédé de fabrication d'une seconde roue d'engrenage (R2) pour mouvement horloger selon l'une des revendications précédentes, **caractérisé en ce que** la quatrième étape (E4) comprend une sous-étape supplémentaire consistant à élaborer un fichier de données numériques représentant numériquement le flanc $r_2$ de la seconde roue d'engrenage (R2) et/ou optionnellement une sous-étape supplémentaire consistant à reconstruire le flanc $r_2$ de la seconde roue d'engrenage (R2) pour un module m non unitaire prédéfini ou saisi par une interface homme machine.

8. Procédé de fabrication d'une seconde roue d'engrenage (R2) pour mouvement horloger selon l'une des revendications précédentes, **caractérisé en ce que** la cinquième étape (E5) de fabrication de la seconde roue d'engrenage (R2) par un dispositif de fabrication comprend une sous-étape de transfert (E51) du résultat de la quatrième étape à un dispositif de fabrication, notamment sous forme d'un transfert de données numériques par un dispositif de communication du calculateur mettant en oeuvre les troisième et quatrième étapes (E3, E4) vers le dispositif de fabrication, et **en ce qu'**il comprend une sous-étape (E52) de fabrication de la seconde roue d'engrenage (R2) par enlèvement de matière, notamment par usinage, ou par addition de matière, notamment par électroformage.

9. Système de fabrication d'une seconde roue d'engrenage (R2) pour mouvement horloger, adaptée pour coopérer avec une première roue d'engrenage (R1) donnée, **caractérisé en ce qu'**il comprend un calculateur et un dispositif de fabrication agencé pour mettre en oeuvre le procédé de fabrication selon l'une des revendications 1 à 8.

**Patentansprüche**

1. Verfahren zur Herstellung eines zweiten Zahnrads (R2) für ein Uhrwerk, das dazu angepasst ist, mit einem gegebenen ersten Zahnrad (R1) zusammenzuwirken, **dadurch gekennzeichnet, dass** es die folgenden Schritte beinhaltet:

E1 - Erfassen, mit Hilfe einer Mensch-Maschine-Schnittstelle, die mit einem Rechner assoziiert ist, der Flanke $r_1$ aller oder eines Teils der Zähne und der Anzahl Zähne $z_1$ des ersten Zahnrads (R1),

- Erfassen der Anzahl Zähne $z_2$ des herzustellenden zweiten Zahnrads (R2) und
- Erfassen eines Reibungskoeffizienten $\mu$ eines Paares in Kontakt stehender Zähne der zwei Zahnräder (R1, R2),

E2 - Betrachten einer ersten Gleichung, die die Leistungs- oder Drehmomentbilanz mindestens eines Paares in Kontakt stehender Zähne der zwei Zahnräder (R1, R2) definiert, und

- Betrachten einer zweiten kinematischen Gleichung, die die kinematische Beziehung des mindestens einen Paares in Kontakt stehender Zähne der zwei Zahnräder (R1, R2) definiert, und

E3 - Auflösen der zwei Gleichungen mit dem Rechner, sodass mindestens ein Wert des als konstant angenommenen Drehmomentverhältnisses $j$ des mindestens einen Paares in Kontakt stehender Zähne der zwei Zahnräder (R1, R2) erhalten werden kann, und
E4 - Bestimmen von mindestens zwei Punkten der Flanke mindestens eines Abschnitts des Zahns des zweiten Zahnrads (R2) des mindestens einen Zahnpaares und Konstruieren der Flanke $r_2$ des Zahns des zweiten Zahnrads (R2), beispielsweise durch Interpolation, insbesondere durch Interpolation einer Folge von Geraden und/oder Kurven, insbesondere Splines, zwischen den Punkten, und
E5 - Herstellen des zweiten Zahnrads (R2) durch eine Herstellungsvorrichtung, wobei dieses zweite Zahnrad (R2) Zähne beinhaltet, deren Flanke $r_2$ dem Ergebnis des vorhergehenden Schritts entspricht.

2. Verfahren zur Herstellung eines zweiten Zahnrads (R2) für ein Uhrwerk nach dem vorhergehenden Anspruch, **dadurch gekennzeichnet, dass** der zweite Schritt (E2) darin besteht, die folgende erste Leistungsbilanzgleichung zu betrachten:

$$C_1 \cdot \omega_1 - C_2 \cdot \omega_2 + F_{\text{frot}} \cdot v_{12} = 0 \quad (1)$$

wobei $C_1$ und $C_2$ die jeweiligen Drehmomente der zwei Zahnräder (R1, R2), die an einem Kontaktpunkt der Eingriffslinie der zwei Zahnräder (R1, R2) relativ zu den jeweiligen Drehachsen (A1, A2) der zwei Zahnräder (R1, R2) gemessen werden, für eine gegebene Winkelstellung des ersten Zahnrads (R1) darstellen,

$\omega_1$ und $\omega_2$ die jeweiligen Winkelgeschwindigkeiten der zwei Zahnräder (R1, R2) darstellen und

$F_{\text{frot}}$ die Reibungskraft an dem Kontaktpunkt der zwei Zahnräder (R1, R2) darstellt,

und dass er darin besteht, die folgende kinematische Gleichung zu betrachten:

$$\frac{\partial r_2}{\partial u} \times \frac{\partial r_2}{\partial \theta} \cdot v_{12} = 0 \quad (2)$$

wobei $r_2$ mindestens einen Abschnitt der Flanke eines Zahns des zweiten Zahnrads (R2) in Kontakt mit einem Zahn des ersten Zahnrads (R1) darstellt, ausgedrückt in einem Bezugssystem unter Berücksichtigung einer gekrümmten Abszisse $u$ und einer Winkelgröße $\theta$, und

$v_{12}$ die Gleitgeschwindigkeit zwischen den zwei Zahnrädern (R1, R2) an ihrem Kontaktpunkt darstellt.

3. Verfahren zur Herstellung eines zweiten Zahnrads (R2) für ein Uhrwerk nach Anspruch 2, **dadurch gekennzeichnet, dass** in dem Fall, in dem das erste Zahnrad (R1) ein Stirnrad ist, das zweite Zahnrad (R2) ein Stirnrad ist, das dazu fähig ist, sich durch Drehung um eine zweite Drehachse (A2), die zu der ersten Drehachse (A1) des ersten Zahnrads (R1) parallel ist, zu verzahnen, und dass der zweite Schritt (E2) darin besteht, die folgende erste Gleichung zu betrachten:

$$\frac{1+j}{1+\bar{\imath}} = \frac{n_x z_1}{2(r_{ny}n_x - r_{nx}n_y)} - \frac{\mu z_1}{2r_{1n}(\sin\widehat{r_1 n} \pm \mu\cos\widehat{r_1 n})}\frac{|r_{nx}|}{|r_{ny}n_x - r_{nx}n_y|} \quad (3)$$

wobei

$$j = \frac{c_2}{c_1} = \text{konstant}$$

,

- $\bar{\imath}$ den Mittelwert des Übersetzungsverhältnisses zwischen den zwei Zahnrädern (R1, R2) darstellt,
- $n_x$, $n_y$ die Komponenten $x$ und $y$ der Normalen zu dem Profil des ersten Zahnrads (R1) an dem Kontaktpunkt zwischen den zwei Zahnrädern (R1, R2) darstellen,
- das Profil $r_{1n}$ der Zähne des ersten Zahnrads (R1) durch $r_{1n} = (r_{nx}, r_{ny})$ ausgedrückt wird, wobei $r_{nx}$ und $r_{ny}$ die Komponenten $x$ und $y$ des normalisierten Profils von $r_1$ an dem Kontaktpunkt zwischen den zwei Zahnrädern (R1, R2) sind,
- $\widehat{r_1 n}$ den Winkel darstellt, der durch den Ortsvektor des Punkts des betroffenen Profils und die Normale n zu der Flanke $r_1$ des ersten Zahnrads (R1) gebildet wird.

4. Verfahren zur Herstellung eines zweiten Zahnrads (R2) für ein Uhrwerk nach Anspruch 1 oder 3, **dadurch gekennzeichnet, dass** in dem Fall, in dem das erste Zahnrad (R1) ein Stirnrad ist, das zweite Zahnrad (R2) ein Stirnrad ist, das dazu fähig ist, sich durch Drehung um eine zweite Drehachse (A2), die zu der ersten Drehachse (A1) des ersten Zahnrads (R1) parallel ist, zu verzahnen,

und dass der zweite Schritt (E2) darin besteht, die folgende kinematische Gleichung zu betrachten:

$$\frac{c_x - r_x}{n_x} = \frac{c_y - r_y}{n_y} \quad (4)$$

wobei

das Profil $r_1$ der Zähne des ersten Zahnrads (R1) durch $r_1 = (r_x, r_y)$ ausgedrückt wird, wobei $r_x$ und $r_y$ die Komponenten $x$ und $y$ des Profils $r_1$ an dem Kontaktpunkt zwischen den zwei Zahnrädern (R1, R2) sind;

- $c_x$, $c_y$ die Komponenten $x$ und $y$ des momentanen Drehmittelpunkts darstellen;
- $n_x$, $n_y$ die Komponenten $x$ und $y$ der Normalen zu dem Profil des ersten Zahnrads an dem Kontaktpunkt zwischen den zwei Zahnrädern (R1, R2) darstellen,

oder dass der zweite Schritt (E2) darin besteht, die folgende kinematische Gleichung zu betrachten:

$$\frac{1+i}{1+\bar{\iota}} = \frac{n_x z_1}{2(r_{ny}n_x - r_{nx}n_y)} \quad (5)$$

wobei

- $i$ das momentane Übersetzungsverhältnis an einem Kontaktpunkt zwischen den zwei Zahnrädern (R1, R2) darstellt,

- $\bar{\iota}$ den Mittelwert des Übersetzungsverhältnisses zwischen den zwei Zahnrädern (R1, R2) darstellt,
- $n_x, n_y$ die Komponenten x und y der Normalen zu dem Profil des ersten Zahnrads an dem Kontaktpunkt zwischen den zwei Zahnrädern (R1, R2) darstellen,
- E den Achsabstand zwischen den zwei Zahnrädern (R1, R2) darstellt,
- das Profil $r_{1n}$ der Zähne des ersten Zahnrads (R1) durch $r_{1n} = (r_{nx}, r_{ny})$ ausgedrückt wird, wobei $r_{nx}$ und $r_{ny}$ die Komponenten x und y des normalisierten Profils der Flanke $r_1$ an dem Kontaktpunkt zwischen den zwei Zahnrädern (R1, R2) sind.

5. Verfahren zur Herstellung eines zweiten Zahnrads (R2) für ein Uhrwerk nach Anspruch 3, **dadurch gekennzeichnet, dass** der dritte Schritt (E3), der darin besteht, die Gleichungen aufzulösen, die folgenden Teilschritte beinhaltet:

E31 - Definieren eines Minimalwerts $j_{min}$ und eines möglichen Maximalwerts $j_{max}$ des Drehmomentverhältnisses $j$ zwischen den zwei Zahnrädern (R1, R2) mittels Durchführung der folgenden Berechnungen:

$$j_{max} = \bar{\iota} = \frac{z_2}{z_1}$$

und

$$j_{min} = i_{min} = \frac{\omega_{1(\phi)}}{\omega_{2(\phi)}} r_1$$

wobei
$\phi$ den Winkel darstellt, der den Kontaktpunkt der Flanken $r_1$ und $r_2$ auf der Linie der Mittelpunkte der zwei Zahnräder (R1, R2) definiert, und
$\omega_1$ und $\omega_2$ die jeweiligen Winkelgeschwindigkeiten der zwei Zahnräder (R1, R2) darstellen;
E32 - Auflösen der ersten Gleichung (3) für mehrere Punkte der Flanke $r_1$ des ersten Zahnrads (R1), um mehrere Werte des Drehmomentverhältnisses $j$ zu bestimmen:

$$\frac{1+j}{1+\bar{\iota}} = \frac{n_x z_1}{2(r_{ny}n_x - r_{nx}n_y)} - \frac{\mu z_1}{2r_{1n}(sin\widehat{r_1 n} \pm \mu cos\widehat{r_1 n})} \frac{|r_{nx}|}{|r_{ny}n_x - r_{nx}n_y|}$$

E33 - Identifizieren der Drehmomentverhältniswerte $j$, die mit der zweiten kinematischen Gleichung kompatibel sind;
E34 - Auswählen eines Drehmomentverhältniswerts j aus den kompatiblen Drehmomentverhältniswerten, die in dem vorhergehenden Schritt identifiziert wurden, gemäß einer vordefinierten Regel, beispielsweise der Maximierung des mittleren Wirkungsgrads.

6. Verfahren zur Herstellung eines zweiten Zahnrads (R2) für ein Uhrwerk nach einem der vorhergehenden Ansprüche, **dadurch gekennzeichnet, dass** der erste Schritt (E1) einen zusätzlichen Teilschritt beinhaltet, der darin besteht, die gewünschte Auflösung für die Berechnung der Flanke $r_2$ des zweiten Zahnrads (R2) zu erfassen, und dass der vierte Schritt (E4) eine diskrete Auflösung gestattet, die Punkte der Flanke $r_2$ des zweiten Zahnrads (R2) gemäß der während des ersten Schritts (E1) erfassten Auflösung definiert.

7. Verfahren zur Herstellung eines zweiten Zahnrads (R2) für ein Uhrwerk nach einem der vorhergehenden Ansprüche, **dadurch gekennzeichnet, dass** der vierte Schritt (E4) einen zusätzlichen Teilschritt, der darin besteht, eine digitale Datendatei zu erstellen, die die Flanke $r_2$ des zweiten Zahnrads (R2) digital darstellt, und/oder optional einen zusätzlichen Teilschritt, der darin besteht, die Flanke $r_2$ des zweiten Zahnrads (R2) für einen vordefinierten oder durch eine Mensch-Maschine-Schnittstelle erfassten nicht unitären Modul m zu rekonstruieren, beinhaltet.

8. Verfahren zur Herstellung eines zweiten Zahnrads (R2) für ein Uhrwerk nach einem der vorhergehenden Ansprüche, **dadurch gekennzeichnet, dass** der fünfte Schritt (E5) zur Herstellung des zweiten Zahnrads (R2) durch eine Herstellungsvorrichtung einen Teilschritt des Übertragens (E51) des Ergebnisses des vierten Schritts an eine Herstellungsvorrichtung beinhaltet, insbesondere in Form einer digitalen Datenübertragung durch eine Kommunikationsvorrichtung des Rechners, der den dritten und vierten Schritt (E3, E4) durchführt, an die Herstellungsvorrichtung, und dass er einen Teilschritt (E52) des Herstellens des zweiten Zahnrads (R2) durch das Entfernen von Material, insbesondere durch Bearbeitung, oder durch das Hinzufügen von Material, insbesondere durch Elektroformung, beinhaltet.

9. System zur Herstellung eines zweiten Zahnrads (R2) für ein Uhrwerk, das dazu angepasst ist, mit einem gegebenen ersten Zahnrad (R1) zusammenzuwirken, **dadurch gekennzeichnet, dass** es einen Rechner und eine Herstellungsvorrichtung, die dazu eingerichtet ist, das Herstellungsverfahren nach einem der Ansprüche 1 bis 8 durchzuführen, beinhaltet.

**Claims**

1. A method for manufacturing a second gearwheel (R2) for clock movement, suitable for cooperating with a given first gearwheel (R1), **characterized in that** it comprises the following steps:

   E1 - entering via a human-machine interface associated with a computer the flank $r_1$ of all or part of the teeth and the number of teeth $z_1$ of the first gearwheel (R1),

   - entering the number of teeth $z_2$ of the second gearwheel (R2) to be manufactured, and
   - entering a friction coefficient $\mu$ of a pair of teeth in contact with the two gearwheels (R1, R2),

   E2 - considering a first equation defining the power or torque balance of at least one pair of teeth in contact with the two gearwheels (R1, R2), and

   - considering a second kinematic equation defining the kinematic relationship of the at least one pair of teeth in contact with the two gearwheels (R1, R2), and

   E3 - solving the two equations by the computer, making it possible to obtain at least one value of the assumed constant torque ratio $j$ of the at least one pair of teeth in contact with the two gearwheels (R1, R2), and
   E4 - determining at least two points of the flank of at least one portion of the tooth of the second gearwheel (R2) of said at least one pair of teeth and constructing the flank $r_2$ of said tooth of the second gearwheel (R2), for example by interpolation, notably by interpolation by a succession of straight lines and/or curves, notably of splines, between said points, and
   E5 - manufacturing the second gearwheel (R2) by a manufacturing device, this second gearwheel (R2) comprising teeth whose flank $r_2$ corresponds to the result of the preceding step.

2. The method for manufacturing a second gearwheel (R2) for clock movement as claimed in the preceding claim, **characterized in that** the second step (E2) consists in considering the following first power balance equation:

$$C_1 \cdot \omega_1 - C_2 \cdot \omega_2 + F_{\mathrm{frot}} \cdot v_{12} = 0 \quad (1)$$

in which $C_1$ and $C_2$ represent the respective torques of the two gearwheels (R1, R2), measured at a point of contact of the line of meshing of the two gearwheels (R1, R2), relative to the respective rotation axes (A1, A2) of the two gearwheels (R1, R2), for a given angular position of the first gearwheel (R1),
$\omega_1$ and $\omega_2$ represent the respective angular velocities of the two gearwheels (R1, R2), and
$F_{\mathrm{frot}}$ represents the friction force at the point of contact of the two gearwheels (R1, R2),
and **in that** it consists in considering the following second kinematic equation:

$$\frac{\partial r_2}{\partial u} \times \frac{\partial r_2}{\partial \theta} \cdot v_{12} = 0 \quad (2)$$

in which $r_2$ represents at least one portion of the flank of a tooth of the second gearwheel (R2) in contact with a tooth of the first gearwheel (R1), expressed in a coordinate considering a curvilinear abscissa u and an angular quantity $\theta$ and

$v_{12}$ represents the sliding velocity between the two gearwheels (R1, R2) at their point of contact.

3. The method for manufacturing a second gearwheel (R2) for clock movement as claimed in claim 2, **characterized in that**, in the case where the first gearwheel (R1) is a spur gear, the second gearwheel (R2) is a spur gear capable of meshing by rotation about a second rotation axis (A2) parallel to the first rotation axis (A1) of the first gearwheel (R1), and **in that** the second step (E2) consists in considering the following first equation:

$$\frac{1+j}{1+\bar{\iota}} = \frac{n_x\, z_1}{2(r_{ny}\, n_x - r_{nx}\, n_y)} - \frac{\mu\, z_1}{2r_{1n}(\sin\widehat{r_1 n} \pm \mu\, \cos\widehat{r_1 n})} \frac{|r_{nx}|}{|r_{ny}\, n_x - r_{nx}\, n_y|} \quad (3)$$

- in which

$$j = \frac{c_2}{c_1} = \text{constant}$$

- $\bar{\iota}$ represents the mean value of the transmission ratio between the two gearwheels (R1, R2),
- $n_x$, $n_y$ represent the $x$ and $y$ components of the normal to the profile of the first gearwheel (R1), at the point of contact between the two gearwheels (R1, R2),
- the profile $r_{1n}$ of the teeth of the first gearwheel (R1) is expressed by $r_{1n} = (r_{nx}, r_{ny})$, $r_{nx}$ and $r_{ny}$ being the $x$ and $y$ components of the normalized profile of $r_1$ at the point of contact between the two gearwheels (R1, R2), and

- $\widehat{r_1 n}$ represents the angle formed by the position vector of the point of the profile concerned and the normal $n$ to the flank $r_1$ of the first gearwheel (R1).

4. The method for manufacturing a second gearwheel (R2) for clock movement as claimed in claim 1 or 3, **characterized in that**, in the case where the first gearwheel (R1) is a spur gear, the second gearwheel (R2) is a spur gear capable of meshing by rotation about a second rotation axis (A2) parallel to the first rotation axis (A1) of the first gearwheel (R1),

and **in that** the second step (E2) consists in considering the following kinematic equation:

$$\frac{c_x - r_x}{n_x} = \frac{c_y - r_y}{n_y} \quad (4)$$

in which

the profile $r_1$ of the teeth of the first gearwheel (R1) is expressed by $r_1 = (r_x, r_y)$, $r_x$ and $r_y$ being the $x$ and $y$ components of the profile $r_1$ at the point of contact between the two gearwheels (R1, R2);

- $c_x$, $c_y$ represent the $x$ and $y$ components of the instantaneous center of rotation;
- $n_x$, $n_y$ represent the $x$ and $y$ components of the normal to the profile of the first gearwheel at the point of contact between the two gearwheels (R1, R2),

or **in that** the second step (E2) consists in considering the following kinematic equation:

$$\frac{1+i}{1+\bar{\iota}} = \frac{n_x\, z_1}{2(r_{ny}\, n_x - r_{nx}\, n_y)} \quad (5)$$

in which

- $i$ represents the instantaneous transmission ratio at a point of contact between the two gearwheels (R1, R2),

- $\bar{\imath}$ represents the mean value of the transmission ratio between the two gearwheels (R1, R2),
- $n_x$, $n_y$ represent the $x$ and $y$ components of the normal to the profile of the first gearwheel at the point of contact between the two gearwheels (R1, R2),
- E represents the center distance of the two gearwheels (R1, R2),
- the profile $r_{1n}$ of the teeth of the first gearwheel (R1) is expressed by $r_{1n} = (r_{nx}, r_{ny})$, $r_{nx}$ and $r_{ny}$ *being the* $x$ and $y$ components of the normalized profile of the flank $r_1$ at the point of contact between the two gearwheels (R1, R2).

**5.** The method for manufacturing a second gearwheel (R2) for clock movement as claimed in claim 3, **characterized in that** the third step (E3) which consists in solving the equations comprises the following substeps:

E31 - defining a possible minimum value $j_{min}$ and maximum value $j_{max}$ of the torque ratio $j$ between the gearwheels (R1, R2), by implementing the following computations:

$$j_{max} = \bar{\imath} = \frac{z_2}{z_1}$$

and

$$j_{min} = i_{min} = \frac{\omega_1(\phi)}{\omega_2(\phi)} r_1$$

in which

$\phi$ represents the angle defining the point of contact of the flanks $r_1$ and $r_2$ on the line of the centers of the two gearwheels (R1, R2), and
$\omega_1$ and $\omega_2$ represent the angular velocities respectively of the two gearwheels (R1, R2);

E32 - solving the first equation (3) for several points of the flank $r_1$ of the first gearwheel (R1) to determine several values of the torque ratio $j$:

$$\frac{1+j}{1+\bar{\imath}} = \frac{n_x\,z_1}{2(r_{ny}\,n_x - r_{nx}\,n_y)} - \frac{\mu\,z_1}{2r_{1n}(\sin\widehat{r_1 n} \pm \mu\,\cos\widehat{r_1 n})} \frac{|r_{nx}|}{|r_{ny}\,n_x - r_{nx}\,n_y|}$$

E33 - identifying the torque ratio $j$ values compatible with the second kinematic equation;
E34 - selecting a torque ratio j value from the compatible ratio values identified in the preceding step according to a predefined rule, such as, for example, maximization of the mean efficiency.

**6.** The method for manufacturing a second gearwheel (R2) for clock movement as claimed in one of the preceding claims, **characterized in that** the first step (E1) comprises an additional substep consisting in entering the desired resolution for the computation of the flank $r_2$ of the second gearwheel (R2) and **in that** the fourth step (E4) allows a discrete resolution, defining points of the flank $r_2$ of the second gearwheel (R2) according to the resolution entered in the first step (E1).

**7.** The method of manufacturing a second gearwheel (R2) for clock movement as claimed in one of the preceding claims, **characterized in that** the fourth step (E4) comprises an additional substep consisting in creating a digital data file digitally representing the flank $r_2$ of the second gearwheel (R2) and/or, optionally, an additional substep consisting in reconstructing the flank $r_2$ of the second gearwheel (R2) for a non-unitary modulus m predefined or entered through a human-machine interface.

**8.** The method for manufacturing a second gearwheel (R2) for clock movement as claimed in one of the preceding claims, **characterized in that** the fifth step (E5) of manufacturing the second gearwheel (R2) by a manufacturing device comprises a substep (E51) of transferring the result of the fourth step to a manufacturing device, notably in the form of a digital data transfer by a communication device of the computer implementing the third and fourth steps (E3, E4) to the manufacturing device, and **in that** it comprises a substep (E52) of manufacturing the second gearwheel (R2) by material removal, notably by machining or by material addition, notably by electroforming.

9. A system for manufacturing a second gearwheel (R2) for clock movement, suitable for cooperating with a given first gearwheel (R1), **characterized in that** it comprises a computer and a manufacturing device, and implements the manufacturing method as claimed in one of claims 1 to 8.

Fig.1

| | |
|---|---|
| Saisir des données | E1 |
| Mettre en équations, première équation de bilan de puissance et seconde équation cinématique | E2 |
| Résoudre des équations, déterminer le rapport de couple j | E3 |

E31 — Déterminer des bornes pour le rapport de couple j

E32 / E33 — Déterminer des valeurs de j compatibles avec la première et la seconde équation

E34 — Définir une valeur de j selon une règle

E4 — Déterminer la géométrie des dents de la seconde roue d'engrenage R2

E5 — Fabriquer la seconde roue d'engrenage R2

E51 — Transférer le résultat précédent

E52 — Fabriquer

Fig.2

Fig.3

## Fig.4

**EP 3 244 094 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 2453321 A1